# EUROPÄISCHE PATENTSCHRIFT

(11) **EP 2 909 013 B1**
(45) Veröffentlichungstag und Bekanntmachung des Hinweises auf die Patenterteilung: **23.05.2018**
(21) Anmeldenummer: 13780312.8
(22) Anmeldetag: 11.10.2013
(51) Int. Cl.: B29C 70/44, B29C 70/34, B29L 31/08

(54) **VORRICHTUNG UND VERFAHREN ZUR HERSTELLUNG EINES ROTORBLATTGURTS**
DEVICE AND METHOD FOR PRODUCING A ROTOR BLADE BELT
DISPOSITIF ET PROCÉDÉ DE FABRICATION D'UNE SEMELLE DE LONGERON DE PALE DE ROTOR

(30) Priorität: 22.10.2012 DE 102012219226
(43) Veröffentlichungstag der Anmeldung: 26.08.2015
(73) Patentinhaber: Senvion GmbH, 22297 Hamburg (DE)
(72) Erfinder: BENDEL, Urs, 24787 Fockbek (DE); ZELLER, Lenz, Simon, 24242 Felde (DE); EYB, Enno, 24116 Kiel (DE); RICHERS, Tilman, 60314 Frankfurt am Main (DE); WITTHUS, Jan-Peter, 28790 Schwanewede (DE)
(74) Vertreter: Wallinger Ricker Schlotter Tostmann
(86) Internationale Anmeldenummer: PCT/EP2013/003058
(87) Internationale Veröffentlichungsnummer: WO 2014/063790

(56) Entgegenhaltungen:
- EP-A2- 2 181 834
- US-A- 5 052 906

## Beschreibung

Die Erfindung betrifft eine Vorrichtung zur Herstellung eines Rotorblattgurts für ein Rotorblatt einer Windenergieanlage, umfassend eine Form, die eine im Querschnitt kavitätische Vertiefung aufweist, in die Material für einen Rotorblattgurt einlegbar oder eingelegt ist, sowie eine die Vertiefung abdichtende flächige Formabdeckung, wobei die Vertiefung Seitenwände, eine von den Seitenwänden begrenzte Öffnung und eine Bodenfläche zwischen den Seitenwänden aufweist. Die Erfindung betrifft weiter ein Verfahren zur Herstellung eines Rotorblattgurts für ein Rotorblatt einer Windenergieanlage sowie einen nach dem Verfahren hergestellten oder herstellbaren Rotorblattgurt.

Üblicherweise werden Rotorblattgurte bislang auf Formen hergestellt, die entweder flach sind und somit im Wesentlichen die Unterlage für das Gurtmaterial bilden, oder die eine Vertiefung aufweisen, die wesentlich tiefer ist als die Dicke des herzustellenden Rotorblattgurtes.

Bei einer ebenen Fläche ohne Ränder werden an der Vorderkante und der Hinterkante des Gurtes Sandwichkerne zur Stabilisierung eingesetzt, die nach dem Entformen im Rotorblattgurt verbleiben.
Bei einer kavitätischen Form, also einer Form mit einer Vertiefung, sind die Ränder höher als das Gurtmaterial. Sandwichkerne werden nicht verbaut, sondern lediglich unidirektionale Glasfasern oder andere Fasern. In diesem Fall wird für Harzinfusionen eine Vakuumfolie auf das Gurtmaterial gelegt, das zur Abdeckung an den Ecken bzw. an den Rändern der Seitenwände etwas hochsteht, so dass sich an den Ecken bzw. Rändern im Querschnitt Dreiecke bzw. dreieckige Hohlräume bilden, die beim Infusionieren des Harzmaterials sich mit Harz füllen und teilweise auch noch einzelne Fasern aufnehmen.
In beiden Fällen, also bei der Verwendung ebener Flächen ohne Ränder als auch bei den bislang üblichen kavitätischen Formen ist es notwendig, den Rotorblattgurt nach dem Entformen aufwändig zu besäumen, da entweder die im Querschnitt dreieckigen unerwünschten Harz- und Faserüberstände entfernt werden müssen oder die Außenkanten der Sandwichkerne, die ebenfalls unregelmäßig in Harz eingeschlossen sind, wieder in die gewünschte Form gebracht werden müssen.
Ein Beispiel für eine kavitätische Form bietet EP 2 181 834 A2, worin ein Verfahren zum Herstellen eines faserverstärkten Gurts eines Rotorblatts einer Windenergieanlage aus einem Fasermaterial beschrieben ist gemäß dem Oberbegriff des Anspruchs 1. Das Fasermaterial wird in einer Vertiefung einer Form auf einer Fließhilfe angeordnet, die Vertiefung auf der Oberseite gegen die äußere Umgebung mittels einer Abdeckung abgedichtet, der abgedichtete Innenraum unter Vakuum gesetzt und auf der Oberseite des Fasermaterials Harz an wenigstens einer Stelle auf und/oder in das Fasermaterial gegeben, so dass das Harz zur unter dem Fasermaterial angeordneten Fließhilfe bei angelegtem Vakuum im Innenraum fließt.

Der Erfindung liegt daher die Aufgabe zugrunde, eine Vorrichtung sowie ein Verfahren zur Verfügung zu stellen, mit denen Rotorblattgurte effizient und mit hoher Prozesssicherheit und hoher Produzierbarkeit herstellbar sind, sowie einen nach dem Verfahren herstellbaren Rotorblattgurt.

Diese Aufgabe wird durch eine Vorrichtung zur Herstellung eines Rotorblattgurts für ein Rotorblatt einer Windenergieanlage, umfassend eine Form, die eine im Querschnitt kavitätische Vertiefung aufweist, in die Material für einen Rotorblattgurt einlegbar oder eingelegt ist, sowie eine die Vertiefung abdichtende flächige Formabdeckung, wobei die Vertiefung Seitenwände, eine von den Seitenwänden begrenzte Öffnung und eine Bodenfläche zwischen den Seitenwänden aufweist, gelöst, die dadurch weitergebildet ist, dass eine Höhe der Seitenwände einer Höhe der Seiten des Rotorblattgurts entspricht, wobei für wenigstens einen Rand der Vertiefung wenigstens ein abnehmbarer Führungskörper umfasst ist.

Die erfindungsgemäße Verwendung einer kavitätischen Vertiefung, deren Seitenwände genauso hoch sind wie die Seitenwände des Gurtmaterials sowie Gurtpakets, ermöglicht es zum ersten Mal, die Vertiefung mit dem Gurtmaterial mit einer flächigen Formabdeckung, insbesondere einer vakuumdichten Folie, abzudichten, so dass eine bündige und schlüssige ebene Form erreicht wird, an der sich keine im Querschnitt dreieckigen Faser- und Harzgrate mehr bilden, wobei insbesondere auch keine Fasern sich in diesen Graten befinden können. Es entfällt somit auch die Notwendigkeit der aufwändigen Besäumung. Allenfalls sind noch einige übergelaufene Harznasen, die aufgrund der erfindungsgemäßen Form sehr dünn ausfallen, abzuschlagen, was jedoch bei weitem nicht dem Aufwand eines vollständigen Besäumens entspricht.

Besonders für den Fall, dass das Verfügen des Rotorblattgurtes in der Form mittels eines Harzinfusionsverfahrens geschieht, ist vorteilhafterweise vorgesehen, dass die vertiefte Bodenfläche einen weiter vertieften Angusskanal aufweist, der insbesondere mit einer für Angussmaterial durchlässigen flächigen Kanalabdeckung abgedeckt ist, wobei ein Absaugmittel, insbesondere ein Absaugrohr oder ein Absaugkanal, zwischen dem Material für den Rotorblattgurt und der Formabdeckung angeordnet oder anordnenbar ist. Harz wird somit über die gesamte Länge der Vertiefung in dem Angusskanal in die Bodenfläche der Form eingebracht. Durch das unter der Abdeckung, also insbesondere der vakuumdichten Folie, angeordnete Absaugmittel wird ein Unterdruck erzeugt, der das durch den Angusskanal eingebrachte Harzmaterial bzw. Angussmaterial nach oben saugt, so dass das Gurtmaterial mit dem Angussmaterial, also insbesondere dem Harz, durchtränkt wird.

Vorzugsweise ist vorgesehen, dass der Angusskanal in der Bodenfläche an einer Seite der Vertiefung angeordnet ist und das Absaugmittel auf einer dem Angusskanal im Querschnitt der Vertiefung diagonal gegenüberliegenden Seite der Vertiefung angeordnet oder anordnenbar ist. Die diagonale Anordnung im Querschnitt der Vertiefung ist besonders vorteilhaft, da sich durch die seitliche Versetzung von Absaugmittel zu Angusskanal das flüssige Angussmaterial, also insbesondere das Harz, auch in seitlicher Richtung gleichmäßig verteilt. Dies ist günstiger als bei einer mittigen Anordnung von sowohl Angusskanal als auch Absaugmittel, bei der die seitlichen Bereiche des Gurtpakets weniger mit Harz betränkt werden als der unmittelbar zwischen Angusskanal und Absaugmittel angeordnete Zentralbereich.

Vorteilhafterweise ist eine Fließhilfe umfasst, die auf der flächigen Kanalabdeckung in Richtung zur gegenüberliegenden Seitenwand auf der Bodenfläche der Vertiefung angeordnet ist, wobei unterhalb und/oder oberhalb des Materials des Rotorblattgurts weitere Materialschichten, insbesondere Abreißgewebe, Lochfolien und/oder Absaugvliese, angeordnet oder anordnenbar sind. Die Fließhilfe hilft dabei, dass Angussmaterial an der Unterseite gleichmäßig zu verteilen. Weitere Materialschichten sorgen für ein gleichmäßiges Verteilen sowohl des Angussmaterials als auch des angelegten Vakuums und dafür, dass das Harzmaterial nicht durch das Absaugmittel abgesaugt wird. Die flächige Kanalabdeckung für den Angusskanal besteht vorzugsweise aus einer Lochplatte oder einer Lochfolie.

Erfindungsgemäß ist für wenigstens einen Rand der Vertiefung wenigstens ein abnehmbarer Führungskörper umfasst. In diesem Fall lässt sich der Führungsköper nach dem Verfügen des Rotorblattgurtes abnehmen, so dass das Entformen des Rotorblattgurtes erleichtert wird. Ein solcher Führungskörper kann einen Teil einer Seitenwand oder eine gesamte Seitenwand umfassen.

Vorzugsweise ist eine semipermeable Membran umfasst, die unter der Formabdeckung angeordnet ist, wobei die Membran gegen die Formabdeckung abgedichtet ist und die Membran und die Formabdeckung das Absaugmittel zwischen sich einschließen. Somit kann das Vakuum, das durch das Absaugmittel eingebracht wird, durch die semipermeable Membran wirken und Harz- bzw. Angussmaterial ansaugen, das Angussmaterial kann jedoch nicht durch die semipermeable Membran in das Absaugmittel dringen.

Die der Erfindung zugrunde liegende Aufgabe wird auch durch ein Verfahren zur Herstellung eines Rotorblattgurts für ein Rotorblatt einer Windenergieanlage gelöst, das sich dadurch auszeichnet, dass Fasermaterial und/oder faserverstärktes Material für einen Rotorblattgurt in eine kavitätische Vertiefung einer Form einer zuvor beschriebenen erfindungsgemäßen Vorrichtung eingelegt wird, so dass das Material bezüglich seiner Höhe bündig mit Seitenwänden der Vertiefung abschließt, die Vertiefung mit der flächigen Formabdeckung abgedichtet wird, das Material zum Rotorblattgurt verfügt wird und anschließend der Rotorblattgurt aus der Form entnommen wird, wobei zunächst an der Vorderkante und/oder der Hinterkante des Rotorblattgurtes Körper aus einem Kernwerkstoff, insbesondere aus Balsa oder Schaumstoff, in die Vertiefung eingesetzt werden, zwischen die anschließend das Fasermaterial und/oder das faserverstärkte Material eingelegt wird.

Bei diesem Verfahren kann der Besäumungsschritt entfallen, da der Rotorblattgurt bereits seine endgültige Form aufweist und keine Grate, die insbesondere Fasermaterial enthalten können, vorhanden sind.

Das Fasermaterial und/oder faserverstärkte Material umfasst vorzugsweise trockene Fasergelege, Prepreg-Fasermaterialien und/oder pultrudierte Stäbe aus faserverstärktem Material. Alle diese Materialien, auch die bereits vorimprägnierten Prepregs und pultrudierten Stäbe können mittels Harzinfusion noch miteinander verfügt werden. Auch eine Hitzeverfügung, bei der das Harzmaterial der Harzmatrix aufweicht und sich mit dem Harzmaterial der benachbarten Prepregs bzw. Stäbe verbindet, ist möglich. Pultrudierte Stäbe haben den Vorteil, dass in diesen die Fasern bereits optimal parallel ausgerichtet sind und sich nicht durch exotherme Reaktionen beim Abbinden des Harzes Wellen im Gurtmaterial ausbilden können. Das erfindungsgemäße Verfahren ist jedoch mit allen drei genannten Materialtypen ausführbar, so dass sich die erfindungsgemäßen Vorteile ergeben.

Es ist ebenfalls im Rahmen des erfindungsgemäßen Verfahrens vorgesehen, dass zunächst an der Vorderkante und/oder der Hinterkante des Rotorblattgurtes Körper aus einem Kernwerkstoff, insbesondere aus Balsa oder Schaumstoff, in die Vertiefung eingesetzt werden, zwischen die anschließend das Fasermaterial und/oder das faserverstärkte Material eingelegt wird. In diesem Fall ist ein Komposit-Rotorblattgurt herstellbar, der ebenfalls nicht mehr gesäumt werden muss. Auch die Körper aus dem Kernwerkstoff liegen an den Seitenwänden der Vertiefung an, so dass die Form des Rotorblattgurtes wiederum durch die Vertiefung vorgegeben ist und ein anschließendes Besäumen entfallen kann. Durch den bündigen Abschluss in Bezug auf die Höhe der Seitenwände und die Dicke des Gurtmaterials im Bereich der Seitenwände der Vertiefung entfallen auch die anderen Probleme bezüglich in der Höhe überstehender Grate.

Vorzugsweise erfolgt das Verfügen des Fasermaterials oder des faserverstärkten Materials in der Vertiefung mittels Harzinfusion, das durch einen Angusskanal in der Bodenfläche der Vertiefung, insbesondere an einer Seite der Bodenfläche, einfließt.

Ebenfalls vorteilhafterweise werden Materialschichten, die nach einem Entformen des Rotorblattgurts nach seiner Herstellung als äußere Schicht des Rotorblattgurts verbleiben, bündig mit den Seitenwänden abschließend in die Vertiefung gelegt.

Schließlich wird die der Erfindung zugrunde liegende Aufgabe durch einen Rotorblattgurt für ein Rotorblatt einer Windenergieanlage, gelöst, das in einem zuvor beschriebenen erfindungsgemäßen Verfahren hergestellt oder herstellbar ist.

Die zu den einzelnen Erfindungsgegenständen, also der Vorrichtung, dem Verfahren und dem Rotorblattgurt genannten Merkmale, Eigenschaften und Vorteile gelten auch für die jeweils anderen Erfindungsgegenstände, da sie sich aufeinander beziehen.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig.1: eine schematische Querschnittsdarstellung durch eine erste Vorrichtung,
- Fig. 2: eine schematische Querschnittsdarstellung von Details der erfindungsgemäßen Vorrichtung,
- Fig. 3: Details einer dritten Vorrichtung im schematischen Querschnitt,
- Fig. 4: Details einer vierten Vorrichtung im schematischen Querschnitt,
- Fig. 5a), 5b), 5c): schematische Querschnittsdarstellungen durch Details der Vorrichtungen und
- Fig. 6: eine schematische Querschnittsdarstellung einer Form.

In den Zeichnungen sind jeweils gleiche oder gleichartige Elemente und/oder Teile mit denselben Bezugsziffern versehen, so dass von einer erneuten Vorstellung jeweils abgesehen wird.

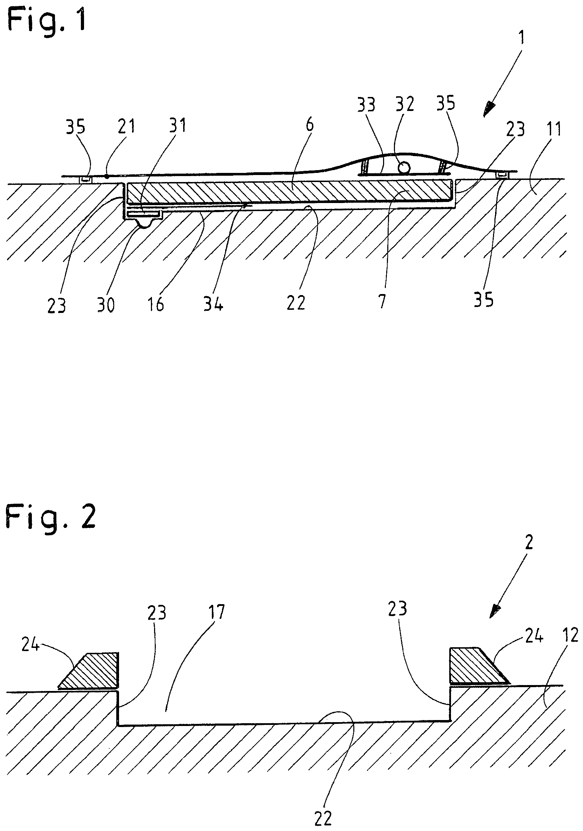

In Fig. 1 ist eine erste Vorrichtung 1 schematisch im Querschnitt dargestellt. Eine Form 11 weist eine im Querschnitt rechteckige Vertiefung 16 auf, in die Fasermaterial 7 eines Rotorblattgurtes 6 eingelegt ist. Die Oberfläche des Fasermaterials 7 schließt bündig mit Seitenwänden 23 der Vertiefung 16 ab. Die Bodenfläche 22 der Vertiefung 16 weist an einer Seite, in Fig. 1 links dargestellt, einen Angusskanal 30 auf, durch den Angussmaterial, insbesondere ein Harz, in die Vertiefung 16 einbringbar ist. Der Angusskanal 30 erstreckt sich der Länge nach durch die Vertiefung 16. Er ist ebenfalls in seiner vollen Länge von einer Kanalabdeckung 31, die eine Lochplatte oder eine Lochfolie sein kann, abgedeckt. Auf der Kanalabdeckung 31 ist eine Fließhilfe 34 aufgelegt, die hilft, flüssiges Angussmaterial in Richtung auf die andere Seite, d.h. die Seite, die dem Angusskanal 30 gegenüberliegt, zu verteilen.

Diagonal gegenüber ist an der Oberseite des Fasermaterials 7 des Rotorblattgurtes 6 ein Absaugmittel, nämlich ein Absaugrohr 32 angeordnet, an dem ein Vakuum anliegt. Mittels des Absaugrohrs 32 wird in der Vertiefung 16 insgesamt ein Vakuum angelegt, dessen Gradient zum Ansaugrohr 32 hin gerichtet ist. Damit wird das flüssige Angussmaterial vom Angusskanal 30 zum Absaugrohr 32 hin gesaugt. Zur Sicherstellung des Unterdrucks in der Vertiefung 16 ist diese mit einer Formabdeckung 21, insbesondere einer vakuumdichten Folie, abgedeckt. Seitlich ist in diesem Fall eine Abdichtung durch so genanntes "Tacky Tape" 35, eine vakuumdichte Klebefolie oder Kleberolle, sichergestellt.

Um zu verhindern, dass Harz- bzw. Angussmaterial in das Absaugrohr 32 eingesaugt wird und dieses verstopft, ist das Absaugrohr 32 durch eine semipermeable Membran 33 geschützt, die für Luft durchlässig ist, für das Angussmaterial jedoch nicht. Wiederum durch "Tacky Tape" 35 ist diese semipermeable Membran 33 gegenüber der Formabdeckung 21 abgedichtet.

Auf diese Weise wird bei Eintrag von flüssigem Angussmaterial durch den Angusskanal 30 und bei Anlegen eines Vakuums oder eines Unterdrucks in dem Absaugrohr 32 ein Druckgefälle erzeugt, das sich durch die Breite und Dicke der Vertiefung 16 erstreckt. Unterstützt durch die Fließhilfe 34 wird Angussmaterial sowohl an der Unterseite des Fasermaterials 7 als auch durch das Fasermaterial 7 selbst in voller Breite gesaugt, so dass das Fasermaterial 7 vollständig und gleichmäßig durchtränkt wird.

In Fig. 2 ist im Vergleich zu Fig. 1 eine erfinderische Ausführungsform einer Vorrichtung 2 gezeigt, bei der die Vertiefung 17 Seitenwände 23 aufweist, die zum Teil durch abnehmbare Führungskörper 24 gebildet sind. Diese definieren zusammen mit der Form 12 die Vertiefung 17. Nach Herstellen des Rotorblattgurts in dieser Form 12 können die Führungskörper 24 abgenommen werden, so dass das Entformen des hergestellten Rotorblattgurtes vereinfacht wird.

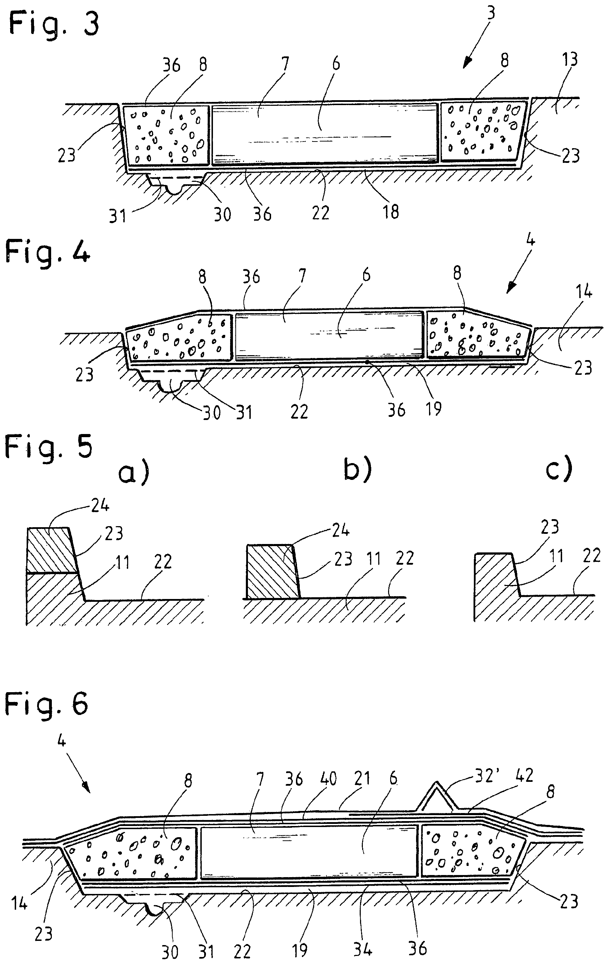

In Fig. 3 ist ein weiteres Ausführungsbeispiel dargestellt. Die Vorrichtung 3 weist eine Form 13 auf mit einer Vertiefung 18, deren Seitenwände 23 etwas abgeschrägt sind. An der linken Seite der Bodenfläche 22 der Vertiefung 18 ist ein Ansaugkanal 30 mit einer Kanalabdeckung 31, die als Lochplatte ausgebildet ist, angeordnet. Auf der gesamten Bodenfläche ist eine erste Faserlage 36 aufgelegt, auf die an der Vorder- und Hinterkante des Gurtes jeweils ein Kernmaterial bzw. Sandwich-Material 8 aus Balsaholz oder einem Schaumstoff eingelegt ist. Deren äußere Seitenwände sind bündig mit den Seitenwänden 23 der Vertiefung 18. Zwischen die Körper aus Sandwich-Materialien 8 ist das Fasermaterial 7 eingebracht, das aus trockenen Fasergelegen, Prepregs oder aus pultrudierten Stäben mit faserverstärktem Harzmaterial bestehen kann. Auf die Körper aus Sandwich-Material 8 und den Körper aus Fasermaterial 7 ist eine abschließende Faserlage 36 aufgebracht, die mit den Seitenwänden 23 der Vertiefung 18 bündig abschließt. Die weiteren Bestandteile der Vorrichtung 3 sind in Fig. 3 nicht dargestellt. Das Ensemble aus Faserlagen 36, Sandwich-Material 8 und Fasermaterial 7 bildet den Rotorblattgurt 6.
Fig. 4 stellt im schematischen Querschnitt ein viertes Ausführungsbeispiel einer Vorrichtung 4 dar, bei der die Vertiefung 19 im Wesentlichen ähnlich ist wie die Vertiefung 18 aus Fig. 3. Auch die weiteren in Fig. 4 dargestellten Elemente entsprechen denen aus Fig. 3. Im Unterschied zum Ausführungsbeispiel aus Fig. 3 ist in Fig. 4 ein Rotorblattgurt 6 dargestellt, der zu den Rändern hin, also zu den Seitenwänden 23 der Vertiefung 19 hin abgeflacht bzw. verjüngt ist. Die gesamte Dicke des Rotorblattgurtes 6 in dessen Zentrum ist damit größer als die Tiefe der Vertiefung 19. Dennoch schließt die obere Faserlage 36 bündig mit den Seitenwänden 23 ab.
In Fig. 5a) bis 5c) sind drei verschiedene Möglichkeiten dargestellt, Seitenwände 23 auszubilden. In Fig. 5a) ist ein unterer Teil der Seitenwand 23 durch einen Teil der Form 11 gebildet, auf den ein abnehmbarer Führungskörper 24 aufgesetzt ist, der die Seitenwand 23 fortführt bis zu deren voller Höhe. In Fig. 5b) bildet die Form 11 lediglich die Bodenfläche 22 und die Seitenwand 23 ist vollständig als Seitenfläche eines abnehmbaren Führungskörpers 23 gebildet. In Fig. 5c) ist die gesamte Seitenwand 23 Teil der Form 11 und es ist kein abnehmbarer Führungskörper vorgesehen.
In Fig. 6 ist eine vollständigere Darstellung der Vorrichtung 4 gemäß Fig. 4 dargestellt. In diesem Fall ist auf der Bodenfläche 22 der Vertiefung 19 über die gesamte Breite eine Fließhilfe 34 gelegt, auf die dann die erste bzw. untere Faserlage 36 aufgelegt ist. Die Fließhilfe 34 sorgt für eine gleichmäßige Verteilung des flüssigen Angussmaterials aus dem Angusskanal 30 in die Vertiefung 19. Auf die untere Faserlage 36 sind die beiden Körper aus Sandwich-Material 8 sowie der zentrale Körper aus Fasermaterial 7 gelegt. Diese Schicht wird durch eine obere Faserlage 36 abgeschlossen, die bündig sowohl mit der Seite der Körper aus Sandwich-Material 8 als auch mit den Seitenwänden 23 der Vertiefung 19 abschließt. Auf die Faserlage 36 sind weitere Lagen von Material aufgelegt, die allerdings nach dem Entformen des Rotorblattgurtes 6 nicht bei diesen verbleiben. Dabei handelt es sich zunächst um eine Lochfolie 40, anstelle der auch beispielsweise ein Abreißgewebe angeordnet sein kann. An der in Fig. 6 rechts dargestellten Seite ist ein Absaugvlies 42 dargestellt, das auch eine semipermeable Membran enthalten kann und der Verbreitung des Vakuums dient, das durch einen Absaugkanal 32' in die Vertiefung 19 eingeleitet wird. Den Abschluss bildet die flächige Formabdeckung 21, die die gesamte Vertiefung 19 und einen Teil der weiteren Form abdeckt.

Am Beispiel der Vorrichtung 4 in Fig. 6 lässt sich darstellen, wie das erfindungsgemäße Verfahren durchgeführt wird. Der Gurt selber besteht wahlweise aus trockenen Gelegen aus Glasfasern, Kohlefasern, Basaltfasern oder Naturfasern, die nach dem Einlegen in die erfindungsgemäße Form mit einer Harzmatrix getränkt werden, beispielsweise durch Vakuuminfusion, oder aus vorgefertigten, ausgehärteten Elementen, die aus glas-, kohle-, basalt- oder naturfaserverstärkter Harzmatrix bestehen und nach ihrem Ablegen in der erfindungsgemäßen Form mit einer Harzmatrix getränkt werden, beispielsweise durch Vakuuminfusion. Solche vorgefertigten, ausgehärteten Elemente können pultrudierte Stäbe sein.

Bei der Variante gemäß Fig. 6 wird eine Harzmatrix durch Vakuuminfusion eingeführt. Dazu wird die Vorrichtung 4 durch den Harzangusskanal 30 unter einem der Sandwich-Abschnitte 8 des Gurtpakets, der durch ein geeignetes harzdurchlässiges Element als Kanalabdeckung 31 so begrenzt ist, dass sich ein bündiger Abschluss zur übrigen Formoberfläche einstellt, mit Angussmaterial, also insbesondere Harz, versorgt. Über den Angusskanal 30 wird eine Fließhilfe 34, beispielsweise eine so genannte "Continuous Mat" oder "Greenmesh" auf die Formenoberfläche gelegt, die sich in Richtung des gegenüberliegenden Formenrandes erstreckt und ggf. auch bis dort ganz hinreichen kann. Nachdem alle Materialien in die Form und auf die Fließhilfe 34 eingelegt sind, wird das eingelegte Material mit einem Vakuumaufbau, der bestehen kann aus Abreissgewebe, Lochfolie, Absaugmedium (beispielsweise Vlies oder Greenmesh) sowie einer semipermeablen Membran und mindestens einer Vakuumfolie bedeckt. Zwischen der semipermeablen Membran und der mindestens einen Vakuumfolie wird der Absaugkanal 32' platziert. Dabei wird der Absaugkanal 32' in der Nähe des dem Angusskanal 30 gegenüberliegenden Formenrandes positioniert und erstreckt sich die semipermeable Membran von dem dem Vakuumkanal 32' naheliegenden Formenrand signifikant in Richtung des gegenüberliegenden Formrandes.

### Bezugszeichenliste

- 1 - 4: Vorrichtung
- 6: Rotorblattgurt
- 7: Fasermaterial
- 8: Sandwichmaterial
- 11 - 14: Form
- 16 - 19: Vertiefung
- 21: Formabdeckung
- 22: Bodenfläche
- 23: Seitenwand
- 24: abnehmbarer Führungskörper
- 30: Angusskanal
- 31: Kanalabdeckung
- 32: Absaugrohr
- 32': Absaugkanal
- 33: semipermeable Membran
- 34: Fließhilfe
- 35: Tacky Tape
- 36: Faserlage
- 40: Lochfolie
- 42: Absaugvlies

## Patentansprüche

1. Vorrichtung (1 - 4) zur Herstellung eines Rotorblattgurts (6) für ein Rotorblatt einer Windenergieanlage, umfassend eine Form (11 - 14), die eine im Querschnitt kavitätische Vertiefung (16 - 19) aufweist, in die Material (7, 8) für einen Rotorblattgurt (6) einlegbar oder eingelegt ist, sowie eine die Vertiefung (16 - 19) abdichtende flächige Formabdeckung (21), wobei die Vertiefung (16 - 19) Seitenwände (23), eine von den Seitenwänden (23) begrenzte Öffnung und eine Bodenfläche (22) zwischen den Seitenwänden (23) aufweist, **dadurch gekennzeichnet, dass** eine Höhe der Seitenwände (23) einer Höhe der Seiten des Rotorblattgurts (6) entspricht, wobei für wenigstens einen Rand der Vertiefung (16 - 19) wenigstens ein abnehmbarer Führungskörper (24) umfasst ist.

2. Vorrichtung (1 - 4) nach Anspruch 1, **dadurch gekennzeichnet, dass** die vertiefte Bodenfläche (22) einen weiter vertieften Angusskanal (30) aufweist, der insbesondere mit einer für Angussmaterial durchlässigen flächigen Kanalabdeckung (31) abgedeckt ist, wobei ein Absaugmittel (32, 32'), insbesondere ein Absaugrohr (32) oder ein Absaugkanal (32'), zwischen dem Material (7, 8) für den Rotorblattgurt (6) und der Formabdeckung (21) angeordnet oder anordnenbar ist.

3. Vorrichtung (1 - 4) nach Anspruch 2, **dadurch gekennzeichnet, dass** der Angusskanal (30) in der Bodenfläche (22) an einer Seite der Vertiefung (16 - 19) angeordnet ist und das Absaugmittel (32, 32') auf einer dem Angusskanal (30) im Querschnitt der Vertiefung (16 - 19) diagonal gegenüberliegenden Seite der Vertiefung (16 - 19) angeordnet oder anordnenbar ist.

4. Vorrichtung (1 - 4) nach Anspruch 2 oder 3, **dadurch gekennzeichnet, dass** eine Fließhilfe (34) umfasst ist, die auf der flächigen Kanalabdeckung (31) in Richtung zur gegenüberliegenden Seitenwand (23) auf der Bodenfläche (22) der Vertiefung (16 - 19) angeordnet ist, wobei unterhalb und/oder oberhalb des Materials (7, 8) des Rotorblattgurts (6) weitere Materialschichten, insbesondere Abreißgewebe, Lochfolien (40) und/oder Absaugvliese (42), angeordnet oder anordnenbar sind.

5. Vorrichtung (1 - 4) nach einem der Ansprüche 1 bis 4, **dadurch gekennzeichnet, dass** eine semipermeable Membran (33) umfasst ist, die unter der Formabdeckung (21) angeordnet ist, wobei die Membran (33) gegen die Formabdeckung (21) abgedichtet ist und die Membran (33) und die Formabdeckung (21) das Absaugmittel (32, 32') zwischen sich einschließen.

6. Verfahren zur Herstellung eines Rotorblattgurts (6) für ein Rotorblatt einer Windenergieanlage, **dadurch gekennzeichnet, dass** Fasermaterial (7) und/oder faserverstärktes Material für einen Rotorblattgurt in eine kavitätische Vertiefung (16 - 19) einer Form (11 - 14) einer Vorrichtung (1 - 4) nach einem der Ansprüche 1 bis 6 eingelegt wird, so dass das Material (7, 8) bezüglich seiner Höhe bündig mit Seitenwänden (23) der Vertiefung (16 - 19) abschließt, die Vertiefung (16 - 19) mit der flächigen Formabdeckung (21) abgedichtet wird, das Material (7, 8) zum Rotorblattgurt (6) verfügt wird und anschließend der Rotorblattgurt (6) aus der Form (11 - 14) entnommen wird, wobei zunächst an der Vorderkante und/oder der Hinterkante des Rotorblattgurtes Körper aus einem Kernwerkstoff (8), insbesondere aus Balsa oder Schaumstoff, in die Vertiefung (16 - 19) eingesetzt werden, zwischen die anschließend das Fasermaterial (7) und/oder das faserverstärkte Material eingelegt wird.

7. Verfahren nach Anspruch 6, **dadurch gekennzeichnet, dass** das Fasermaterial (7) und/oder faserverstärkte Material trockene Fasergelege, Prepreg-Fasermaterialien und/oder pultrudierte Stäbe aus faserverstärktem Material umfasst.

8. Verfahren nach Anspruch 6 oder 7, **dadurch gekennzeichnet, dass** das Verfügen des Fasermaterials (7) oder des faserverstärkten Materials in der Vertiefung (16 - 19) mittels Harzinfusion erfolgt, das durch einen Angusskanal (30) in der Bodenfläche (22) der Vertiefung (16 - 19), insbesondere an einer Seite der Bodenfläche (22), einfließt.

9. Verfahren nach einem der Ansprüche 6 bis 8, **dadurch gekennzeichnet, dass** Materialschichten, die nach einem Entformen des Rotorblattgurts (6) nach seiner Herstellung als äußere Schicht des Rotorblattgurts (6) verbleiben, bündig mit den Seitenwänden (23) abschließend in die Vertiefung (16 - 19) gelegt werden.

## Claims

1. Apparatus (1 - 4) for the production of a rotor blade belt (6) for a rotor blade of a wind turbine with a shape (11 - 14), which comprises a recess (16- 19) forming a cavity at its cross section, in which material (7, 8) for a rotor blade belt (6) is insertable or is inserted, and a flat shape cover (21) to seal the recess (16 - 19), wherein the recess (16 - 19) comprises sidewalls (23), an opening bounded by the sidewalls (23) and a floor area (22) between the sidewalls (23), **characterized in that** the height of the sidewalls (23) corresponds to a height of the sides of the roto blade belt (6), wherein at least one edge of the recess (16 - 19) comprises at least one detachable guide body (24).

2. Apparatus (1 - 4) according to claim 1, **characterized in that** the recessed floor area (22) comprises a further recessed runner (30), which is covered in particular by a permeably flat channel cover (31) for sprue material, wherein suction means (32, 32'), in particular a suction pipe (32) or a suction channel (32'), is arranged or can be arranged between the material (7, 8) for the rotor blade belt (6) and the shape cover (21).

3. Apparatus (1 - 4) according to claim 2, **characterized in that** the runner (30) is arranged in the floor area (22) at one side of the recess (16 - 19) and the suction means (32, 32') is arranged or can be arranged on a side of the recess (16 - 19), which is diagonally opposed to the runner (30) in the cross section.

4. Apparatus (1 - 4) according to claim 2 or 3, **characterized in that** a flow aid (34) is comprised, which is arranged on the flat channel cover (31) in direction towards the opposite sidewall (23) on the floor area (22) of the recess (16 - 19), wherein below and/or above of the material (7, 8) of the rotor blade belt (6) further material layers, in particular peel ply, perforated foils (40) and/or suction fleeces (42), are arranged or can be arranged.

5. Apparatus (1 - 4) according to one of the claims 1 to 4, **characterized in that** a semipermeable membrane (33) is comprised, which is arranged below the shape cover (21), wherein the membrane (33) is sealed against the shape cover (21) and the membrane (33) and the shape cover (21) encloses the suction means (32, 32') in between them.

6. Method to produce a rotor blade belt (6) for a rotor blade of a wind turbine, **characterized in that** fibre material (7) and/or fiber-reinforced material for a rotor blade belt is inserted in a recess (16 - 19) forming a cavity of a shape (11 - 14) of an apparatus (1 - 4) according to one of the claims 1 to 6, so that the material (7, 8) is flush with the sidewalls (23) of the recess (16 - 19) regarding its height, the recess (16 - 19) is sealed with a flat shape cover (21), the material (7, 8) is joined to the rotor blade belt (6) and subsequent the rotor blade belt (6) is taken out of the shape (11 - 14), wherein initially bodies made of a core material (8), in particular of balsa or foam, are inserted into the recess (16 - 19) at the front edge and/or the rear edge of the rotor blade belt, between which subsequently the fibre material (7) and/or the fiber-reinforced material is inserted.

7. Method according to claim 6, **characterized in that** the fibre material (7) and/or the fiber-reinforced material comprises dry fiber fabrics, pre-preg fibre materials and/or pultruded rods made of fiber-reinforced material.

8. Method according to claim 6 or 7, **characterized in that** the joining of the fibre material (7) or of the fiber-reinforced material in the recess (16 - 19) is done by resin infusion, which flows via a runner (30) in the floor area (22) of the recess (16 - 19), in particular at a side of the floor area (22).

9. Method according to one of the claims 6 to 8, **characterized in that** the material layers, which remain as outer layer of the rotor blade belt (6) after a demoulding of the rotor blade belt (6) after its production, are finally put flush with the sidewalls (23) in the recess (16 - 19).

## Revendications

1. Dispositif (1 - 4) de fabrication d'une semelle de longeron de pale de rotor (6) destinée à une pale de rotor d'une éolienne comprenant un moule (11 - 14) présentant un creux (16 - 19) formant une cavité en section transversale, dans lequel une matière (7, 8) destinée à former une semelle de longeron de pale de rotor (6) peut être insérée ou est insérée, ainsi qu'un couvercle de moule (21) plat étanchéifiant le creux (16 - 19), le creux (16 - 19) présentant des parois latérales (23), une ouverture délimitée par les parois latérales (23) et une surface inférieure (22) entre les parois latérales (23), une ouverture délimitée par les parois latérale (23), et un fond (22) entre les parois latérales (23), **caractérisé en ce qu'**une hauteur des parois latérales (23) correspond à une hauteur des côtés de la semelle de longeron de pale de rotor (6), au moins un corps guide (24) amovible étant compris pour au moins un bord du creux (16 - 19).

2. Dispositif (1 - 4) selon la revendication 1, **caractérisé en ce que** le fond évidé (22) présente un canal d'alimentation évidé (30), qui est recouvert, en particulier, d'un couvercle de canal (31) plat laissant passer la matière à couler, un moyen d'aspiration (32, 32'), en particulier un tube d'aspiration (32) ou un canal d'aspiration (32') étant ou pouvant être disposé entre la matière (7, 8) destinée à la semelle de longeron de pale de rotor (6) et le couvercle de moule (21).

3. Dispositif (1 - 4) selon la revendication 2, **caractérisé en ce que** le canal d'alimentation (30) est disposé dans le fond (22) sur un côté du creux (16 - 19) et le moyen d'aspiration (32, 32') est disposé ou peut être disposé sur un côté du creux (16 - 19) diagonalement opposé au canal d'alimentation (30) dans la section transversale du creux (16 - 19).

4. Dispositif (1 - 4) selon la revendication 2 ou la revendication 3, **caractérisé en ce qu'**il comprend un auxiliaire d'écoulement (34) disposé sur le couvercle de canal plat (31) en direction de la paroi latérale (23) opposée sur le fond (22) du creux (16 - 19), d'autres couches de matières, en particulier des tissus d'arrachage, des films perforés (40) et/ou des non-tissés absorbants (42), sont ou peuvent être disposées au-dessous et/ou au-dessus de la matière (7, 8) de la semelle de longeron de pale de rotor (6).

5. Dispositif (1 - 4) selon l'une quelconque des revendications 1 à 4, **caractérisé en ce qu'**il comprend une membrane semi-perméable (33) disposée sous le couvercle de moule (21), la membrane (33) étant hermétique par rapport au couvercle de moule (21) et la membrane (33) et le couvercle de moule (21) enfermant entre eux le moyen d'aspiration (32, 32').

6. Procédé de fabrication d'une semelle de longeron de pale de rotor (6) destinée à une pale de rotor d'une éolienne, **caractérisé en ce qu'**une matière fibreuse (7) et/ou une matière renforcée par des fibres destinée à la formation d'une semelle de longeron de pale de rotor est insérée dans un creux en forme de cavité (16 - 19) d'un moule (11 - 14) d'un dispositif (1 - 4) selon l'une quelconque des revendications 1 à 6, de telle manière que la hauteur de la matière (7, 8) est au même niveau que les parois latérales (23) du creux (16 - 19), le creux (16 - 19) est étanchéifié par le couvercle de moule (21) plat, la matière (7, 8) se solidifie pour obtenir la semelle de longeron de pale de rotor (6), puis le longeron de semelle de pale de rotor (6) est retiré du moule (11 - 14), dans un premier temps des corps constitués d'une matière de noyau (8), en particulier de balsa ou de mousse, sont inserés á l'arête antérieure et/ou l'arête postérieure de la semelle de longeron de pale de rotor, corps entre lesquels la matière fibreuse (7) et/ou la matière renforcée par des fibres est ensuite insérée.

7. Procédé selon la revendication 6, **caractérisé en ce que** la matière fibreuse (7) et/ou la matière renforcée par des fibres comprend un matelas de fibres, des matières fibreuses prépeg et/ou des barres pultrudées constituées d'une matière renforcée par des fibres.

8. Procédé selon la revendication 6 ou la revendication 7, **caractérisé en ce que** la solidification de la matière fibreuse (7) ou de la matière renforcée par des fibres intervient dans le creux (16 - 19) en instillant de la résine qui s'écoule par un canal d'alimentation (30) dans le fond (22) du creux (16 - 19), en particulier sur un côté du fond (22).

9. Procédé selon l'une quelconque des revendications 6 à 8, **caractérisé en ce que** les couches de matières qui restent sous forme de couche extérieure de la semelle de longeron de pale de rotor (6) après un démoulage de celle-ci (6), sont posées pour finir dans le creux (16 - 19) de manière affleurante aux parois latérales (23).
